# EUROPÄISCHE PATENTSCHRIFT

(11) **EP 0 408 508 B1**
(45) Veröffentlichungstag und Bekanntmachung des Hinweises auf die Patenterteilung: **09.11.1994**
(21) Anmeldenummer: 90810514.1
(22) Anmeldetag: 05.07.1990
(51) Int. Cl.: C09B 67/26

(54) **Flüssige Farbstoffzubereitungen, Verfahren zu ihrer Herstellung und ihre Verwendung**
Liquid dyestuff preparations, method for their production and their use
Préparations liquides de colorants, leur méthode de fabrication et leur utilisation

(30) Priorität: 14.07.1989 CH 2645/89
(43) Veröffentlichungstag der Anmeldung: 16.01.1991
(73) Patentinhaber: CIBA-GEIGY AG, 4002 Basel (CH)
(72) Erfinder: Tempel, Ernst, Dr., CH-4125 Riehen (CH); Grimbühler-Can, Pia, CH-4053 Basel (CH)

(56) Entgegenhaltungen:
- EP-A- 0 041 240
- DE-A- 2 143 104
- FR-A- 1 551 772
- FR-A- 2 393 874

## Beschreibung

Die vorliegende Erfindung betrifft stabile, konzentrierte, wässrige Zubereitungen von 1:2-Metallkomplexfarbstoffen, Verfahren zu deren Herstellung und deren Verwendung zum Färben oder Bedrucken von insbesondere stickstoffhaltigen textilen Fasermaterialien.

Es ist bereits bekannt, organische Lösungsmittel zur Herstellung von konzentrierten Zubereitungen von 1:2-Metallkomplexfarbstoffen zu verwenden. So beschreibt die US-A-3 989 452 konzentrierte organische Lösungen von Metallkomplexen sulfogruppenhaltiger Azofarbstoffe, die sich in der Regel mit Wasser beliebig verdünnen lassen und dann z.B. als Färbebäder oder Druckpasten, gegebenenfalls unter Zusatz üblicher Hilfsmittel, verwendet werden können.

Die Anwesenheit grösserer Mengen von organischen Lösungsmitteln in den genannten Färbebädern oder Druckpasten kann allerdings gewisse Nachteile mit sich bringen, wie z.B. Unegalitäten und ungenügende Echtheiten bei den gefärbten/bedruckten Fasermaterialien, verursacht durch einen Stabilitätsverlust der Färbebäder, oder durch die Blockierung feiner Rasteröffnungen der Druckschablonen beim Teppichdruck durch nur ungenügend gelösten Farbstoff, ferner auch Geruchsbelästigungen und Abwasserbelastungen.
Farbstoffzubereitungen, welche organische Lösungsmittel enthalten, sind zudem aus der DE-A-2 143 104 bekannt. Aus der FR-A-2 393 874, der EP-A-0 041 240 und der FR-B-1 551 772 sind Farbstoffzubereitungen bekannt, welche kein Sorbit enthalten.

Die Aufgabe der vorliegenden Erfindung ist es daher, stabile, konzentrierte Zubereitungen von 1:2-Metallkomplexfarbstoffen ohne diese Nachteile bereitzustellen.

Es wurde nun gefunden, dass man die gestellte Aufgabe erfindungsgemäss mit wässrigen, praktisch lösungsmittelfreien, konzentrierten Farbstoffzubereitungen lösen kann. Die in diesen Zubereitungen verwendeten organischen Verbindungen, z.B. Komponente (3), sind allein schon aufgrund ihrer geringen Einsatzmengen nicht in der Lage als eigentliche Lösungsmittel zu wirken. Bei den erfindungsgemässen Zubereitungen handelt es sich also z.B. um wässrige Dispersionen und nicht um organische Lösungen der Farbstoffe.

Gegenstand der vorliegenden Erfindung sind daher stabile konzentrierte, wässrige Zubereitungen von 1:2-Metallkomplexfarbstoffen, dadurch gekennzeichnet, dass sie aus
(1) 10 bis 30 Gew.-% eines 1:2-Metallkomplexfarbstoffes,
(2) 3 bis 30 Gew.-% eines anionischen Dispergators aus der Gruppe der Lignin- oder Oxyligninsulfonsäuren und Kondensationsprodukte aus aromatischen Sulfonsäuren und Formaldehyd oder deren Gemische,
(3) 1 bis 15 Gew.-% Sorbit oder eines Gemisches aus Sorbit und Glyzerin,
(4) 0 bis 25 Gew.-% eines oder mehrerer üblicher Formulierungshilfsmittel aus der Gruppe gegebenenfalls mit Schwefelsäure veresterte Fettalkohol-, Alkylphenol- oder Fettamin-Ethylenoxidaddukte und deren Alkalimetall-, Amin- und Ammoniumsalze, 2-Alkylbenzimidazoldisulfonate, Trimethylglykokoll (Betain), Harnstoff, Caprolactam, langkettige Alkohole, Verbindung der Formel 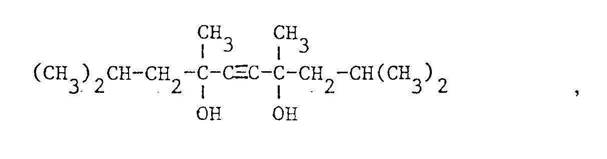 und
   anorganische oder organische Säuren und Basen,
sowie Wasser in einer Menge, dass die Summe aller Komponenten 100 % ergibt, bestehen.

Weitere Gegenstände der vorliegenden Erfindung sind ein Verfahren zur Herstellung der erfindungsgemässen Farbstoffzubereitungen sowie deren Verwendung zur Herstellung von Klotzflotten, Farbebädern oder Druckpasten zum Färben oder Bedrucken von textilen, stickstoffhaltigen Fasermaterialien.

Bei den 1:2-Metallkomplexfarbstoffen [Komponente (1)], die in den erfindungsgemässen Zubereitungen verwendet werden, handelt es sich insbesondere um 1:2-Metallkomplexe von Azo- oder Azomethinfarbstoffen oder Gemischen dieser Farbstoffe, und vorzugsweise um 1:2-Kobalt- oder Chromkomplexe von Azo- oder Azomethinfarbstoffen, die in o-Stellung zur Azo/Azomethinbrücke eine komplexbildene Gruppe, insbesondere eine Amino-, Carboxy- oder Hydroxygruppe aufweisen.

Beispielsweise handelt es sich also um 1:2-Kobalt- oder 1:2-Chromkomplexe von insbesondere o-Carboxy-o'-hydroxy-, o-Hydroxy-o'-amino- oder o,o' -Di-hydroxyazofarbstoffen, die Benzol-azo-benzol-, Naphthalin-azo-naphthalin-, Benzol-azo-naphthalin-, Benzol-azo-pyrazolon-, Benzol-azo-pyridon- oder Benzol-azo-acetessigsäureamid-Strukturen aufweisen, wobei diese Strukturen unsubstituiert oder auch substituiert sein können. Als Substituenten kommen z.B. Carboxyl, Sulfo (-SO₃H), gegebenenfalls substituiertes Sulfonsäureamid, Halogen,Acetamido oder Nitro in Betracht.

Bei den Farbstoffen kann es sich um Mono-, Dis- oder Polyazofarbstoffe handeln, wobei diese auch als Alkalimetall- (Natrium, Kalium) oder Aminsalze (niedermolekulare Alkyl- oder Alkanolamine) vorliegen können.

Die beiden komplexbildenden Farbstoffe, aus denen der 1:2-Metallkomplex aufgebaut ist, können gleich oder verschieden sein. Mischungen von 1:2-Metallkomplexfarbstoffen, wie sie bei der Mischmetallisierung zweier oder mehrerer zur Komplexbildung befähigter Farbstoffe entstehen, sind ebenfalls geeignet.

Die in den erfindungsgemässen Zubereitungen verwendeten 1:2-Metallkomplexfarbstoffe können wasserlöslich, aber auch nur mässig- bis schwerlöslich in Wasser sein. Sie sind in der Patentliteratur vielfach beschrieben.

Anionische Dispergatoren der Komponente (2) sind Kondensationsprodukte aus aromatischen Sulfonsäuren und Formaldehyd, Lignin- oder Oxyligninsulfonsäuren, wobei auch Mischungen dieser Produkte, die gegebenenfalls auch in Salzform vorliegen können, eingesetzt werden können.

Insbesondere genannt seien Kondensationsprodukte aus gegebenenfalls substituierten Naphthalinsulfonsäuren und Formaldehyd, Kondensationsprodukte aus Naphthalinsulfonsäuren, Formaldehyd und Benzolsulfonsäuren, Kondensationsprodukte aus gegebenenfalls substituierten Phenol- oder Kresolsulfonsäuren und Formaldehyd, Alkalimetallsalze von Kondensationsprodukten aus gegebenenfalls substituierten Phenolsulfonsäuren, Formaldehyd und Harnstoff, Kondensationsprodukte aus Ditolylether, Formaldehyd und Schwefelsäure, Alkalimetall- oder Ammoniumsalze der Ligninsulfonsäure oder Oxyligninsulfonsäure. Bei den genannten Alkalimetallsalzen kann es sich um Lithium- oder Kalium- und insbesondere um Natriumsalze handeln.

Die Komponente (3) dient in den erfindungsgemässen Farbstoffzubereitungen im wesentlichen als Feuchthaltemittel; ferner kann sie die Farbstoffe desolubilisieren und bewirkt so eine niedrige Viskosität der Farbstoffzubereitungen (Mittel zur Viskositätsregulierung). In den erfindungsgemässen Farbstoffzubereitungen ist sie in den angegebenen Mengen, vorzugsweise in einer Menge von 1 bis 14 Gew.-% und insbesondere von 2 bis 12 Gew.-% vorhanden. Die Komponente (3) stört die nachfolgende Herstellung von Färbeflotten oder Druckpasten jedoch nicht.

Zu den Formulierungshilfsmitteln, die als Komponente (4) gegebenenfalls in den erfindungsgemässen Farbstoffzubereitungen vorhanden sein können, zählen:
- als anionische Tenside, mit Schwefelsäure veresterte Fettalkohol-, Alkylphenol- oder Fettamin-Ethylenoxidaddukte und deren Alkalimetall-, Amin- oder Ammoniumsalze, sowie insbesondere 2-Alkylbenzimidazoldisulfonate, worin Alkyl 10 bis 25 Kohlenstoffatome aufweist (z.B. sulfonierte Umsetzungsprodukte aus o-Phenylendiamin, Stearinsäure und Benzylchlorid). Sie können in Mengen von etwa 0 bis 5 Gew.-%, insbesondere 1 bis 3 Gew.-%, bezogen auf das Gewicht der Zubereitung, vorhanden sein;
- als zwitterionische Verbindungen mit zusätzlich netzender und auch dispergierender Wirkung, Trimethylglykokoll (Betain), das in Mengen von etwa 0 bis 5 Gew.-%, insbesondere 2 bis 4 Gew.-%, bezogen auf das Gewicht der Zubereitung, vorhanden sein kann;
- als Verbindungen mit solubilisierender Wirkung und zur Verhinderung von unerwünschter Kristallisation, Harnstoff oder insbesondere Caprolactam, die in Mengen von etwa 0 bis 20 Gew.-%, insbesondere 5 bis 10 Gew.-%, bezogen auf das Gewicht der Zubereitung vorhanden sein können;
- als Entlüftungs- und Schaumverhütungsmittel, langkettige Alkohole oder die Verbindung der Formel 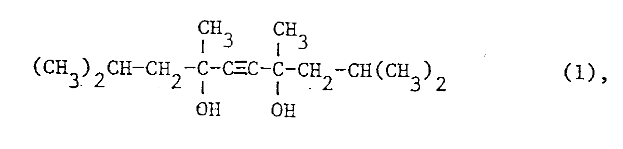 die in Mengen von etwa 0 bis 3 Gew.-%, insbesondere 1 bis 2 Gew.-%, bezogen auf das Gewicht der Zubereitung eingesetzt werden können;
- als pH-Wert regulierende Verbindungen, anorganische oder organische Säuren oder Basen, beispielsweise Mineralsäuren (Salzsäure, Schwefelsäure, Phosphorsäure) oder niedermolekulare Carbonsäuren (Ameisensäure, Essigsäure, Weinsäure) bzw. Alkalimetallhydroxide (Lithium- oder Natriumhydroxid) oder übliche Amine oder Ammoniumverbindungen. Diese Verbindungen können beispielsweise in Mengen von 0 bis 3 Gew.-%, insbesondere von 0 bis 1 Gew.-%, bezogen auf das Gewicht der Zubereitung eingesetzt werden.

Vorzugsweise weisen die erfindungsgemässen Farbstoffzubereitungen die folgende Zusammensetzung auf:
(1) 10 bis 20 Gew.-% eines 1:2-Metallkomplexfarbstoffes,
(2) 5 bis 25 Gew.-% und insbesondere 5 bis 20 Gew.-% eines anionischen Dispergators aus der Gruppe der Lignin- oder Oxyligninsulfonsäuren und Kondensationsprodukte aus aromatischen Sulfonsäuren und Formaldehyd oder deren Gemische,
(3) 2 bis 12 Gew.-% Sorbit oder eines Gemisches aus Sorbit und Glyzerin,
(4) 0 bis 25 Gew.-% eines oder mehrerer üblicher Formulierungshilfsmittel aus der Gruppe gegebenenfalls mit Schwefelsäure veresterte Fettalkohol-, Alkylphenol- oder Fettamin-Ethylenoxidaddukte und deren Alkalimetall-, Amin- und Ammoniumsalze, 2-Alkylbenzimidazoldisulfonate, Trimethylglykokoll (Betain), Harnstoff, Caprolactam, langkettige Alkohole, Verbindung der Formel 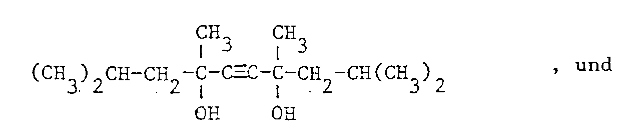 und anorganische oder organische Säuren und Basen,
sowie Wasser in einer Menge, dass die Summe aller Komponenten 100 % ergibt.

Die Herstellung der erfindungsgemässen stabilen, konzentrierten, wässrigen Zubereitungen von 1:2-Metallkomplexfarbstoffen kann nach üblichen Methoden erfolgen, z.B. indem man den Farbstoff mit Wasser, den Komponenten (2), (3) und gegebenenfalls (4) in ein fliessfähiges Gemisch überführt, dieses anschliessend einer mechanischen Zerkleinerung unterwirft und dann mit Wasser und gegebenenfalls weiteren Formulierungshilfsmitteln auf die gewünschte Konzentration einstellt.

Der 1:2-Metallkomplexfarbstoff oder auch Gemische solcher Farbstoffe werden also z.B. als Rohfarbstoff (Presskuchen), gegebenenfalls auch in bereits aufgearbeiteter (entsalzter) Form (z.B. durch eine Membranbehandlung), mit der Komponente (2), der Komponente (3) und gegebenenfalls der Komponente (4) in Wasser angeschlämmt und einer mechanischen Zerkleinerung, insbesondere in Form einer Nassmahlung in dazu geeigneten Perl- oder Sandmühlen unterworfen.

Die Komponente (3) wird als solche oder als wässrige Lösung eingesetzt, wobei die Wassermenge gering gehalten wird und maximal 10 bis 20 Gew.-%, bezogen auf die wässrige Lösung der Komponente (3) beträgt.

Gegebenenfalls kann der synthetisierte und abgeschiedene Rohfarbstoff (Presskuchen) kontinuierlich direkt zu-den erfindungsgemässen Farbstoffzubereitungen weiterverarbeitet werden.

Ein ausreichender Feinverteilungszustand der Farbstoffzubereitung ist erreicht, wenn die Korngrösse der Farbstoffteilchen kleiner als 5 µm ist und vorzugsweise im Bereich von etwa 1 bis 5 µm liegt. Dies kann üblicherweise durch einen Filtertest, unter dem Mikroskop oder durch Sedimentationsanalyse nachgeprüft werden.

Die so erhaltenen erfindungsgemässen Farbstoffzubereitungen enthalten den oder die Farbstoffe in stabiler, feinverteilter Form. Sie können als kolloidale wässrige Lösungen oder wässrige Dispersionen vorliegen, sind gut giessbar und über einen weiten Temperaturbereich (z.B. -10 bis +40°C, insbesondere auch im Bereich um 0°C) sowie auch gegenüber mechanischen Einflüssen stabil. Mit Wasser sind sie in jedem Verhältnis misch- bzw. verdünnbar, ohne dass die Farbstoffe ausfallen oder Phasenbildung eintritt.

Sie sind zur Herstellung von Klotzflotten, Färbebädern oder Druckpasten (Verdünnungsfaktoren im Bereich von 1:1 bis 1:15) zum Färben und Bedrucken von insbesondere textilen, stickstoffhaltigen Fasermaterialien geeignet, wobei textile Polyamidfasermaterialien, insbesondere solche aus synthetischen Polyamiden, z.B. Polyamid-6 oder -6,6, die in den verschiedensten Verarbeitungszuständen, gegebenenfalls auch in Mischungen mit anderen Fasermaterialien, vorliegen können, bevorzugt sind.

Ein bevorzugtes Einsatzgebiet ist dabei das Färben derartiger Textilmaterialien nach dem Polyamid-Continue-Verfahren im Automobil(Automotive)- und Teppichsektor (Pad-Batch- oder Pad-Steam-Verfahren).

Der Erfindungsgegenstand wird in den nachfolgenden Beispielen näher erläutert. Teile und Prozentangaben beziehen sich auf das Gewicht, sofern nicht anders angegeben. Gewichtsteile stehen zu Volumenteilen im Verhältnis von Kilogramm zu Liter. Die Temperatur ist in Celsiusgraden angegeben.

### Beispiel 1

In ein Mahlgefäss werden 91 Teile Wasser und 50 Teile wässrige Sorbitlösung (enthaltend eine geringe Menge an Glyzerin und bis etwa 20% Wasser, bezogen auf die gesamte Lösung) vorgelegt. Unter Rühren gibt man 200 Teile ε-Caprolactam, 50 Teile Naphthalinsulfonsäure-Formaldehyd-Kondensationsprodukt (Pulver) und 30 Teile Sulfitablauge (Pulver) hinzu. In die klare Lösung werden dann portionsweise 429 Teile eines Presskuchens des Farbstoffs C.I. Acid Blue 171 (Trockengehalt: 37%) eingetragen und anschliessend mit einem Zahnscheibendissolver während 2 Stunden dispergiert. Nach Zugabe von 50 Teilen Wasser wird die Farbstoffzubereitung während 1 Stunde einer Nassmahlung (430 UpM) in Gegenwart von Glasperlen (Durchmesser 1 mm) unterworfen. Das Mahlgefäss wird dabei mit Wasser gekühlt. Der Mahlendpunkt ist erreicht, wenn auf dem Filterpapier (Filtertest) kein Rückstand mehr nachweisbar ist.

Der Filtertest wird so durchgeführt, dass man 1 g Farbstoff (100%) in 100 ml Wasser aufnimmt, 2 Minuten rührt, durch ein Filterpapier (Schleicher und Schüll, Nr. 597) filtriert und mit 50 ml Wasser nachspült.

Die Glasperlen werden abgesiebt und mit 100 Teilen Wasser gereinigt; dieses Waschwasser wird mit der Farbstoffzubereitung vereinigt.

Die so erhaltene feinteilige Farbstoffdispersion weist einen Farbstoffgehalt von 15,9 Gew.-% und einen Gesamttrockengehalt von 43,9 Gew.-% auf.

Sie ist in Temperaturbereichen von -10 bis +40°C während mehreren Monaten stabil. Sie ist giess- und dosierbar und zur Herstellung von Farbflotten oder Druckpasten sehr gut geeignet.

In analoger Weise erhält man feinteilige Farbstoffdispersionen, die die folgenden Zusammensetzungen aufweisen:
(a) 13,0 Gew.-% C.I. Acid Yellow 116
   10,0 Gew.-% wässrige Sorbitlösung (enthaltend eine geringe Menge an Glyzerin und etwa 10 bis 20 Gew.-% Wasser)
   14,0 Gew.-% Naphthalinsulfonsäure-Formaldehyd-Kondensationsprodukt
   1,0 Gew.-% der Verbindung der Formel 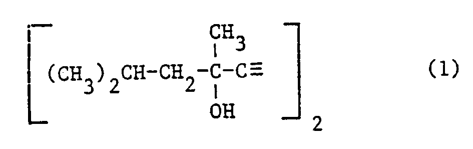 (50%ige Lösung in Ethylenglykol)
   1,0 Gew.-% 1-Benzyl-2-heptadecylbenzimidazoldisulfonsäure-Natriumsalz
   61,0 Gew.-% Wasser.
   Anstelle von C.I. Acid Yellow 116 kann man auch C.I. Acid Yellow 59 einsetzen.
(b) 16,7 Gew.-% C.I. Acid Orange 162
   8,0 Gew.-% wässrige Sorbitlösung (enthaltend eine geringe Menge an Glyzerin und Wasser wie unter (a) angegeben)
   12,0 Gew.-% Sulfitablauge (Pulver)
   6,0 Gew.-% Naphthalinsulfonsäure-Formaldehyd-Kondensationsprodukt
   1,0 Gew.-% der Verbindung der Formel (1) (50%ige Lösung in Ethylenglykol)
   1,5 Gew.-% 1-Benzyl-2-heptadecylbenzimidazoldisulfonsäure-Natriumsalz
   54,8 Gew.-% Wasser.
(c) 12,5 Gew.-% C.I. Acid Red 251
   10,0 Gew.-% wässrige Sorbitlösung (enthaltend eine geringe Menge an Glyzerin und Wasser wie unter (a) angegeben)
   8,0 Gew.-% Naphthalinsulfonsäure-Formaldehyd-Kondensationsprodukt
   8,5 Gew.-% Sulfitablauge (Pulver)
   2,0 Gew.-% Trimethylglykokoll (Betain)
   1,0 Gew.-% der Verbindung der Formel (1) (50%ige Lösung in Ethylenglykol)
   58,0 Gew.-% Wasser.
(d) 18,0 Gew.-% C.I. Acid Blue 171
   5,0 Gew.-% wässrige Sorbitlösung (enthaltend eine geringe Menge an Glyzerin und Wasser wie unter (a) angegeben)
   5,5 Gew.-% Naphthalinsulfonsäure-Formaldehyd-Kondensationsprodukt
   2,5 Gew.-% Sulfitablauge (Pulver)
   19,5 Gew.-% ε-Caprolactam
   49,5 Gew.-% Wasser.
(e) 18,5 Gew.-% C.I. Acid Brown 226
   9,0 Gew.-% wässrige Sorbitlösung (enthaltend eine geringe Menge an Glyzerin und Wasser wie unter (a) angegeben)
   10,0 Gew.-% Naphthalinsulfonsäure-Formaldehyd-Kondensationsprodukt
   7,5 Gew.-% Sulfitablauge (Pulver)
   1,0 Gew.-% Trimethylglykokoll (Betain)
   1,5 Gew.-% der Verbindung der Formel (1) (50%ige Lösung in Ethylenglykol)
   1,0 Gew.-% 1-Benzyl-2-heptadecylbenzimidazoldisulfonsäure-Natriumsalz
   51,5 Gew.-% Wasser.
(f) 15,5 Gew.-% C.I. Acid Black 132
   2,0 Gew.-% wässrige Sorbitlösung (enthaltend eine geringe Menge an Glyzerin und Wasser wie unter (a) angegeben)
   5,0 Gew.-% Sulfitablauge (Pulver)
   18,5 Gew.-% ε-Caprolactam
   2,0 Gew.-% Trimethylglykokoll (Betain)
   0,5 Gew.-% Weinsäure
   1,5 Gew.-% 1-Benzyl-2-heptadecylbenzimidazoldisulfonsäure-Natriumsalz
   55,0 Gew.-% Wasser.

## Patentansprüche

1. Stabile, konzentrierte, wässrige Zubereitungen von 1:2-Metallkomplexfarbstoffen, dadurch gekennzeichnet, dass sie aus
(1) 10 bis 30 Gew.-% eines 1:2-Metallkomplexfarbstoffes,
(2) 3 bis 30 Gew.-% eines anionischen Dispergators aus der Gruppe der Lignin-oder Oxyligninsulfonsäuren und Kondensationsprodukte aus aromatischen Sulfonsäuren und Formaldehyd oder deren Gemische,
(3) 1 bis 15 Gew.-% Sorbit oder eines Gemisches aus Sorbit und Glyzerin,
(4) 0 bis 25 Gew.-% eines oder mehrerer üblicher Formulierhilfsmittel aus der Gruppe gegebenenfalls mit Schwefelsäure veresterte Fettalkohol-, Alkylphenol-oder Fettamin-Ethylenoxidaddukte und deren Alkalimetall-, Amin- und Ammoniumsalze, 2-Alkylbenzimidazoldisulfonate, Trimethylglykokoll (Betain), Harnstoff, Caprolactam, langkettige Alkohole, Verbindung der Formel 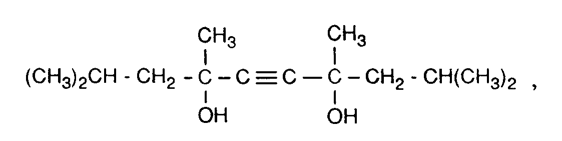 und anorganische oder organische Säuren und Basen,
sowie Wasser in einer Menge, dass die Summe aller Komponenten 100 % ergibt, bestehen.

2. Zubereitungen nach Anspruch 1, dadurch gekennzeichnet, dass sie als Komponente (1) 1:2-Metallkomplexe von Azo- oder Azomethinfarbstoffen oder Gemische dieser Farbstoffe enthalten.

3. Zubereitungen nach Anspruch 2, dadurch gekennzeichnet, dass sie als Komponente (1) 1:2-Kobalt- oder Chromkomplexe von Azo- oder Azomethinfarbstoffen enthalten, die in o-Stellung zur Azo/Azomethinbrücke eine komplexbildende Gruppe, insbesondere eine Amino-, Carboxy- oder Hydroxygruppe aufweisen.

4. Zubereitungen nach Anspruch 1, dadurch gekennzeichnet, dass sie als Komponente (2) Kondensationsprodukte aus gegebenenfalls substituierten Naphthalinsulfonsäuren und Formaldehyd, Kondensationsprodukte aus Naphthalinsulfonsäuren, Formaldehyd und Benzolsulfonsäuren, Kondensationsprodukte aus gegebenenfalls substituierten Phenol-oder Kresolsulfonsäuren und Formaldehyd, Alkalimetallsalze von Kondensationsprodukten aus gegebenenfalls substituierten Phenolsulfonsäuren, Formaldehyd und Harnstoff oder Kondensationsprodukte aus Ditolylether, Formaldehyd und Schwefelsäure enthalten.

5. Zubereitungen gemäss Anspruch 1, dadurch gekennzeichnet, dass sie aus
10 bis 20 Gew.-% Komponente (1),
5 bis 20 Gew.-% Komponente (2),
2 bis 12 Gew.-% Komponente (3),
0 bis 25 Gew.-% Komponente (4),
jeweils bezogen auf die gesamte Zubereitung, sowie Wasser in einer Menge, dass die Summe aller Komponenten 100 % ergibt, bestehen.

6. Verfahren zur Herstellung der Zubereitungen nach einem der Ansprüche 1 bis 5, dadurch gekennzeichnet, dass man den Farbstoff mit Wasser, den Komponenten (2), (3) und gegebenenfalls (4) in ein fliessfähiges Gemisch überführt, dieses anschliessend einer mechanischen Zerkleinerung unterwirft und dann mit Wasser und gegebenenfalls weiteren Formulierhilfsmitteln auf die gewünschte Konzentration einstellt.

7. Verwendung der stabilen, konzentrierten, wässrigen Zubereitungen nach einem der Ansprüche 1 bis 5 zur Herstellung von Klotzflotten, Färbebädern oder Druckpasten zum Färben oder Bedrucken von textilen stickstoffhaltigen Fasermaterialien, insbesondere synthetischen Polyamidfasermaterialien.

## Claims

1. A stable, concentrated, aqueous formulation of a 1:2 metal complex dye, which comprises (1) 10 to 30 % by weight of a 1:2 metal complex dye, (2) 3 to 30 % by weight of an anionic dispersant from the group of lignin- or oxyligninsulfonic acids and condensation products of aromatic sulfonic acids and formaldehyde or mixtures thereof, (3) 1 to 15 % by weight of sorbitol or a mixture of sorbitol and glycerols, (4) 0 to 25 % by weight of one or more conventional formulation auxiliaries from the group of adducts of ethylene oxide with fatty alcohols, alkylphenols or fatty amines, esterified if desired with sulfuric acid, and the alkali metal, amine and ammonium salts thereof, 2-alkylbenzimidazoledisulfonates, trimethylglycocoll (betaine), urea, caprolactam, long-chain alcohols, the compound of the formula 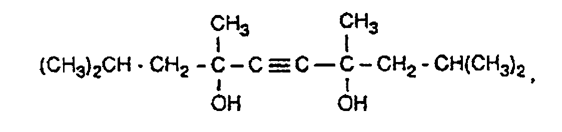 and inorganic or organic acids and bases, and water in an amount such that the sum of all the components is 100 %.

2. A formulation according to claim 1, which contains a 1:2 metal complex of an azo or azomethine dye or a mixture of these dyes as component (1).

3. A formulation according to claim 2, which contains a 1:2 cobalt or chromium complex of an azo or azomethine dye which contains a complexing group, in particular an amino, carboxyl or hydroxyl group, in the o-position relative to the azo/azomethine bridge as component (1).

4. A formulation according to claim 1, which contains a condensation product of a substituted or unsubstituted naphthalenesulfonic acid and formaldehyde, a condensation product of a naphthalenesulfonic acid, formaldehyde and a benzenesulfonic acid, a condensation product of a substituted or unsubstituted phenol- or cresolsulfonic acid and formaldehyde, an alkali metal salt of a condensation product of a substituted or unsubstituted phenolsulfonic acid, formaldehyde and urea or a condensation product of ditolyl ether, formaldehyde and sulfuric acid as component (2).

5. A formulation according to claim 1, which comprises 10 to 20 % by weight of component (1), 5 to 20 % by weight of component (2), 2 to 12 % by weight of component (3), and 0 to 25 % by weight of component (4), in each case based on the total formulation, and water in an amount such that the sum of all the components is 100 %.

6. A process for the preparation of a formulation according to any one of claims 1 to 5, which comprises converting the dye into a free-flowing mixture with water and components (2), (3) and if appropriate (4), subsequently subjecting this mixture to mechanical comminution and then optionally adjusting the mixture to the desired concentration with water and optionally other formulation assistants.

7. The use of a stable, concentrated, aqueous formulation according to any one of claims 1 to 5 for the preparation of padding liquors, dyebaths or printing pastes for dyeing or printing textile nitrogen-containing fibre materials, in particular synthetic polyamide fibre materials.

## Revendications

1. Préparations aqueuses concentrées stables de complexes colorant-métal 2:1, caractérisées en ce qu'elles sont constituées de
(1) 10 à 30 % en poids d'un complexe colorant-métal 2:1,
(2) 3 à 30% en poids d'un agent de dispersion anionique du groupe des acides lignine- ou oxyligninesulfoniques et des produits de condensation d'acides sulfoniques aromatiques et de formaldéhyde ou des mélanges de ceux-ci,
(3) 1 à 15 % enpoids de sorbitol ou d'un mélange de sorbitol et de glycérol,
(4) 0 à 25 % en poids d'un ou de plusieurs adjuvants de formulation habituels du groupe constitué des produits d'addition d'oxyde d'éthylène sur des alcools gras, des alkylphénols ou des amines grasses pouvant être sous forme d'esters sulfates, et leur sels de métal alcalin, d'amine et d'ammonium, de 2-alkylbenzimidazoldisulfonate, de triméthylglycocole (bétaïne), d'urée, de caprolactame, des alcools à longue chaîne, des composés de formule 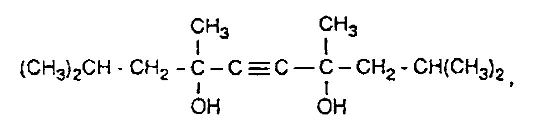 et des acides et bases minéraux ou organiques,
ainsi que de l'eau en une quantité telle que la somme de tous les composants étant égale à 100 %.

2. Préparations conformes à la revendication 1, caractérisées en ce qu'elles contiennent comme composant (1) des complexes colorant métal 2:1 de colorants azoïques ou azométhiniques ou des mélanges de ceux-ci.

3. Préparations conformes à la revendication 2, caractérisées en ce qu'elles contiennent comme composant (1) des colorants azoïques ou azométhiniques cobaltofères ou chromofères (2:1) ayant en position ortho par rapport au pont azo/azométhine, un groupe complexant, en particulier un groupe amino, carboxy ou hydroxy.

4. Préparations conformes à la revendication 1, caractérisées en ce qu'elles contiennent comme composant (2) des produits de condensation d'acides naphtalènesulfoniques pouvant être substitués et de formaldéhyde, des produits de condensation d'acides naphtalènesulfoniques, de formaldéhyde et d'acides benzènesulfoniques, des produits de condensation d'acides phénol-ou crésolsulfoniques éventuellement substitués et formaldéhyde, des sels de métal alcalin de produits de condensation d'acides phénolsulfoniques éventuellement substitués, de formaldéhyde et durée, des produits de condensation de ditolyléther, de formaldéhyde et d'acide sulfurique.

5. Préparations conformes à la revendication 1, caractérisées en ce qu'elles sont constituées de
10 à 20 % en poids de composant (1),
5 à 20 % en poids de composant (2),
2 à 12 % en poids de composant (3),
0 à 25 % en poids de composant (4),
rapporté à la préparation totale, ainsi que de l'eau en une quantité telle que la somme de tous les composants soit égale à 100 %.

6. Procédé pour la fabrication de préparations conformes à une des revendications 1 à 5, caractérisé en ce que l'on met le colorant avec de l'eau, avec les composants (2), (3) et éventuellement (4) sous forme d'un mélange fluide, que l'on soumet celui-ci ensuite à un broyage mécanique et que l'on ajuste la concentration avec de l'eau et éventuellement avec d'autres adjuvants de formulation.

7. Utilisation des préparations aqueuses concentrées stables conformes à une des revendications 1 à 5 pour la préparation de bains de foulardage, de bains de teinture ou de pâtes d'impression pour la teinture ou l'impression de matériau fibreux textiles contenant des atomes d'azote, en particulier des matériaux en fibres de polyamide synthétique.
